# EUROPÄISCHE PATENTSCHRIFT

(11) **EP 0 700 879 B1**
(45) Veröffentlichungstag und Bekanntmachung des Hinweises auf die Patenterteilung: **19.08.1998**
(21) Anmeldenummer: 95114140.7
(22) Anmeldetag: 08.09.1995
(51) Int. Cl.: C03C 17/25, C03C 17/34

(54) **Kratzfeste Beschichtung aus Aluminiumoxid auf einem Glas-Substrat und Verfahren zu ihrer Herstellung**
Scratch-resistant aluminium oxide coating on a glass substrate and process for its manufacture
Revêtement en oxyde d'aluminium résistant aux rayures sur un substrat en verre et procédé pour sa production

(30) Priorität: 10.09.1994 DE 4432235
(43) Veröffentlichungstag der Anmeldung: 13.03.1996
(73) Patentinhaber: Bayerische Motoren Werke Aktiengesellschaft, 80788 München (DE)
(72) Erfinder: Ruppert, Karl, D-83104 Tuntenhausen (DE); Holtmann, Klaus, D-38678 Clausthal (DE)

(56) Entgegenhaltungen:
- FR-A- 1 584 498
- GB-A- 1 434 322
- GB-A- 2 199 848
- JOURNAL OF NON-CRYSTALLINE SOLIDS, Bd. 121, Nr. 1/3, 1.Mai 1990 AMSTERDAM NL, Seiten 329-333, XP 000161077 R. NASS ET AL. 'Synthesis of an Alumina coating from Chelated Aluminium Alkoxides'
- JOURNAL OF THE AMERICAN CERAMIC SOCIETY, Bd. 68, Nr. 9, 1985 COLUMBUS US, Seiten 500-505, M. KUMAGAI ET AL 'Controlled Transformation and Sintering of a Boehmite Sol-Gel by alpha-Alumina Seeding'
- JOURNAL OF MATERIALS SCIENCE MATERIALS IN ELECTRONICS., Bd. 3, Nr. 1, März 1992 LONDON GB, Seiten 20-25, XP 000261174 Y. KOBAYASHI ET AL 'Preparation of a Transparent Alumina Film, etc.'
- DATABASE WPI Section Ch, Week 7906 Derwent Publications Ltd., London, GB; Class L01, AN 79-10718B & JP-A-53 147 710 ( SUMITOMO CHEMICAL KK) , 22.Dezember 1978
- CHEMICAL ABSTRACTS, vol. 104, no. 4, 27.Januar 1986 Columbus, Ohio, US; abstract no. 23226h, Seite 236;
- DATABASE WPI Section Ch, Week 9503 Derwent Publications Ltd., London, GB; Class A60, AN 95-019020 & JP-A-06 305 776 ( DENKI KAGAKU KOGYO KK) , 1.November 1994

## Beschreibung

Die Erfindung betrifft eine kratzfeste Beschichtung aus Aluminiumoxid auf einem Glas-Substrat, mit den im Oberbegriff des Patentanspruches 1 angegebenen Merkmalen und ein Verfahren zu ihrer Herstellung.

In der Derwent-Zusammenfassung AN 79-10718B (JP-A-53147710) ist ein Verfahren zur Oberflächenbeschichtung eines Quarz-Glases beschrieben, bei dem ein nicht näher bezeichnetes Aluminium-Sol verwendet ist. Das nach einer Vorbehandlung in das Aluminium-Sol eingetauchte Quarz-Glas wird zunächst langsam auf 400 °C und dann schnell auf 1200 °C erhitzt.

In dem Journal of Non-Crystalline Solids, Bd. 121, Nr. 1/3, 1990, Seiten 329 bis 333 werden verschiedene Alkoxid-Gele auf der Basis von Aluminium-sec-Butoxid-Isopropanol und HNO₃ (Katalysator) hergestellt. Um ein Ausfallen des Aluminiums während der Hydrolyse zu vermeiden, wird ein Chelat zugesetzt. Als Chelat wird Acetylaceton (AcAcH) oder Ethylacetoacetat (EAA) in verschiedenen Mischungsverhältnissen verwendet. Das getrocknete Gel wird als monolithischer Festkörper bzw. Gel-Pulver bis zur Phasenumwandlung in α-Al₂O₃ erhitzt.

In dem Journal of the American Ceramic Society, Bd. 68, Nr. 9, 1985, Seiten 500 bis 505 wird die Phasentransformation geimpfter und ungeimpfter Boehmit-Gele in den stabilen Korund (α-Al₂O₃) untersucht. Die Boehmit-Gele werden in anderer Weise zu monolithischen Festkörpern getrocknet. Anschließend wird untersucht, wie weit sich die Transformationstemperatur der γ-Al₂O₃-Übergangsformen in den Korund durch Keimzugabe senken läßt.

Bei der FR-A-1 584 498 wird pulverisierter Korund (Al₂O₃) auf Glas aufgebracht und erhitzt, wodurch Korund in das Glas diffundiert.

Bei den in dem Journal of Materials Science, Materials in Electronics, Bd. 3, Nr. 1, 1992, Seiten 20 bis 25, angegebenen Filmen handelt es sich nicht um Beschichtungen auf einem thermisch beständigen Substrat, sondern um Festkörper. Die transparenten Festkörper werden aus einem wässrigen AgCl₃-Sol hergestellt, das mit CdS dotiert ist. AgCl₃ ist ein Aluminiumsalz, das durch Calcinieren auf 1200 °C Korund bildet.

Die Erfindung betrifft eine Beschichtung und ein Verfahren gemäß den unabhängigen Patentansprüchen 1 und 4,

Vorteilhafte Ausgestaltungen der Erfindung sind den Unteransprüchen entnehmbar.

Zwei Ausführungsbeispiele der Erfindung werden anhand einer Zeichnung näher erläutert. Es zeigen
- Fig. 1: ein erstes Ausführungsbeispiel mit einer kratzfesten Beschichtung auf einer durchsichtigen Glasscheibe und
- Fig. 2: ein zweites Ausführungsbeispiel mit einer Sperrschicht zwischen den in Fig. 1 angegebenen Schichten.

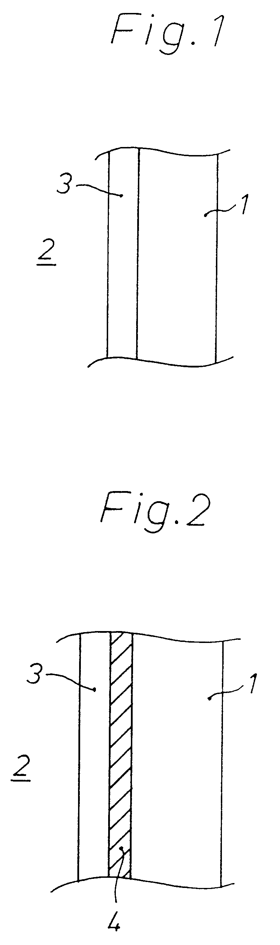

Bei dem ersten Ausführungsbeispiel gemäß Fig. 1 ist eine die Windschutzscheibe eines Kraftfahrzeugs bildende Glasscheibe 1 mit einer kratzfesten Beschichtung an der Fahrzeugaußenseite 2 versehen, die im wesentlichen durch Tonerde (Al₂O₃) 3 gebildet ist. Die Tonerde ist im Sol-Gel-Verfahren bei Raumtemperatur auf die Glasscheibe 1 aufgetragen worden, bei dem die Glasscheibe 1 über eine Tauch-und Abziehvorrichtung in die in Wasser gelöste Tonerde (Tonerde-Sol) eingetaucht und mit einer dünnen Tonerde-Schicht versehen worden ist, die eine Dicke weniger als 2000 nm aufweist. Die Tauch- und Abziehvorrichtung ist in ihrer Ziehgeschwindigkeit geregelt. Die Temperatur des Tonerde-Sols und seine Konzentration sind auf vorgegebene Werte eingestellt. Dieses auf die Glasscheibe 1 aufgetragene Tonerde-Sol wird in einem verfahrensmäßigen Zwischenschritt beispielsweise von einem Ofen oder einer Brennerflamme auf eine Temperatur etwa zwischen 300 bis 500 °C erwärmt, wodurch sich noch eventuell vorhandene Flüssigkeitsanteile des Tonerde-Sols verflüchtigen und das Gefüge der Tonerde in die chemisch nicht stabile γ-Phase umgewandelt wird. Nach einer Abkühlung wird die mit Tonerde 3 beschichtete Glasscheibe 1 auf eine Vorwärmtemperatur etwa zwischen 300 und 500 Grad vorgewärmt, um bei der nachfolgenden Erhitzung Spannungsrisse zu vermeiden. Eine separate Vorwärmphase ist beispielsweise dann nicht erforderlich, wenn sich das nachfolgende Erhitzen unmittelbar an die eine Gefügeumwandlung der Tonerde in die γ-Phase bewirkende Erwärmung anschließt.

In einem nachgeordneten Verfahrensschritt ist die mit Tonerde 3 in γ-Phase beschichtete Glasscheibe 1 auf eine Temperatur > 1000 °C zu erwärmen, um eine Gefügeumwandlung der Tonerde 3 in die stabile α-Phase (Korund) zu bewirken. Diese durch die Umwandlung in Korund extrem harte Tonerde 3 auf der Glasscheibe 1 ist ein wirksamer Schutz, der trotz seiner geringen Dicke Schäden wie Kraftspuren an der Glasscheibe 1 beispielsweise durch den Betrieb des Scheibenwischers oder beim Reinigen der Windschutzscheibe mittels eines Eisschabers verhindern kann. Die Tonerde 3 ist lediglich in einer solchen geringen Dicke auf die Glasscheibe 1 aufgetragen, daß die mit der Tonerde 3 beschichtete Glasscheibe 1, auf die eventuell weitere Schichten an der Vorder- oder Rückseite der Glasscheibe 1 aufgetragen sind, durchsichtig bleibt. Die Umwandlungstemperatur zur Gefügeumwandlung der Tonerde 3 in die α-Phase und/oder in die γ-Phase kann dadurch vermindert werden, daß in das Tonerde-Sol nanokristalline Keime eingebracht werden, die eine Verminderung der betreffenden Umwandlungstemperatur bewirken. Die nanokristallinen Keime sind α-Aluminiumoxid-Keime und/oder γ-Aluminiumoxid-Keime mit einer mittleren Teilchengröße von 10 bis 200 Nanometer, vorzugsweise 100 Nanometer, die im Gefüge in die betreffende α- bzw. γ-Phase umgewandelt sind. Die α-Aluminiumoxid-Keime und/oder die γ-Aluminiumoxid-Keime sollten der Tonerde in dem So etwa in einer Menge von 0,1 bis 15 Gew.-%, vorzugsweise 1 bis 7 Gew.-%, bezogen auf das Gewicht der Tonerde in dem Sol, zugegeben werden.

Das in Fig. 2 dargestelle zweite Ausführungsbeispiel ist ähnlich wie das erste Ausführungsbeispiel gebildet. Zur Vermeidung einer wiederholten Beschreibung sind die mit dem ersten Ausführungsbeispiel vergleichbaren Schichten mit gleichen Bezugszahlen versehen. Bei diesem Ausführungsbeispiel ist auf die Glasscheibe 1 bzw. auf eine nicht dargestellte Schicht der Glasscheibe 1 eine Sperrschicht 4 beispielsweise ebenfalls im Sol-Gel-Verfahren aufgebracht, die im vorliegenden Fall aus SiO₂ besteht. Dieser Verbund aus der Sperrschicht 4 und der Glasscheibe 1 wird wie die Glasscheibe 1 bei dem ersten Ausführungsbeispiel an der Fahrzeugaußenseite 2 im Sol-Gel-Verfahren mit einer sehr dünnen Schicht aus Tonerde-Sol beschichtet, die nach dem zum ersten Ausführungsbeispiel gemäß Fig. 1 angegebenen Verfahren so erhitzt wird, daß sich die Tonerde 3 nach einer anfänglichen Gefügeumwandlung in die γ-Phase schließlich in die chemisch stabile α-Phase umwandelt, in der die Tonerde 3 als harter Korund vorliegt und die Glasscheibe 1 schützt.

Die Erfindung kann auch in einer von den beiden Ausführungsbeispielen abweichenden Weise realisiert werden. Die Tonerde ist vorzugsweise über das besonders kostengünstige Sol-Gel-Verfahren auf das Substrat aufzubringen, das an sich ein beliebiges, für die erforderliche Erhitzung der Tonerde ausreichend thermisch beständiges Bauteil sein kann. Die Sperrschicht bei dem zweiten Ausführungsbeispiel soll eine störende Natriumdiffusion in das Tonerde-Gel verhindern. Diese Schicht kann durch ein anderes, beispielsweise durchsichtiges Material ersetzt sein oder kann entfallen, wenn beispielsweise vor dem Aufbringen des Tonerde-Sols das Substrat durch Auslaugen von Alkalien in einem Säure- oder Laugenbad so vorbehandelt ist, daß eine störende Diffusion von Stoffen des Substrats oder einer Schicht des Substrats in das Tonerde-Gel verhindert oder zumindest so herabgesetzt ist, daß eine störende Diffusion in dieses Tonerde-Gel nicht erfolgt. Die kratzfeste Beschichtung kann auf dem Substrat in einer gewünschten Dicke aufgetragen sein. Bei größeren Dicken der kratzfesten Beschichtung ist dies lichtteildurchlässig oder lichtundurchlässig. Bei einer sehr dünnen kratzfesten Beschichtung bleibt ein mit der kratzfesten Beschichtung versehenes durchsichtiges Substrat lichtdurchlässig bzw. durchsichtig. Aus den in den Figuren angegebenen Dickenverhältnissen ist nicht auf die tatsächliche Dicke einer Schicht zu schließen.

## Patentansprüche

1. Kratzfeste Beschichtung auf einem Glas-Substrat, das in ein Aluminium-Sol getaucht und nach einer Erwärmung auf eine mittlere Temperatur so erhitzt worden ist, daß die Oberfläche des Glas-Substrats eine Schicht aufweist, die α-Al₂O₃ enthält,
dadurch gekennzeichnet, daß das Aluminium-Sol ein Tonerde-Sol ist, mit dem im wesentlichen Tonerde im Sol-Gel-Verfahren auf das Glas-Substrat (1) aufgebracht und vor einer Erhitzung bis zur Gefügeumwandlung in die α-Phase durch Erwärmen in die γ-Phase überführt worden ist.

2. Beschichtung nach Anspruch 1,
dadurch gekennzeichnet, daß das Glas-Substrat eine Glasscheibe (1) ist und die α-Aluminiumoxid-Schicht (3) lediglich eine solche Dicke aufweist, daß die beschichtete Glasscheibe (1) durchsichtig ist.

3. Beschichtung nach Anspruch 1 oder 2,
dadurch gekennzeichnet, daß zwischen dem Glas-Substrat (1) und der α-Aluminiumoxid-Schicht (3) eine Sperrschicht (4) vorgesehen ist, die eine die α-Aluminiumoxid-Bildung störende Diffusion von Elementen oder Verbindungen aus dem Glas-Substrat (1) verhindert.

4. Verfahren zur Herstellung der kratzfesten Beschichtung nach einem der vorstehenden Ansprüche,
dadurch gekennzeichnet, daß zur Erniedrigung der Umwandlungstemperatur für die Gefügeumwandlung in die α-Phase dem Tonerde-Sol α-Aluminiumoxid-Keime und/oder γ-Aluminiumoxid-Keime zugesetzt werden.

5. Verfahren nach Anspruch 4,
dadurch gekennzeichnet, daß die α-Aluminiumoxid-Keime bzw. die γ-Aluminiumoxid-Keime eine mittlere Teilchengröße von 10 bis 200 Nanometer, vorzugsweise etwa 100 Nanometer aufweisen.

6. Verfahren nach Anspruch 4 oder 5,
dadurch gekennzeichnet, daß die α-Aluminiumoxid-Keime bzw. die γ-Aluminiumoxid-Keime in einer Menge von 0,1 bis 15 Gew.-%, vorzugsweise 1 bis 7 Gew.-%, bezogen auf das Gewicht der Tonerde in dem Sol, zugegeben werden.

7. Verfahren nach Anspruch 6,
dadurch gekennzeichnet, daß vor dem Erhitzen zur Gefügeumwandlung der Tonerde in die α-Phase das Glas-Substrat mit der in die γ-Phase umgewandelten Tonerde zur Vermeidung von Spannungsrissen vorgewärmt wird.

## Claims

1. A scratch-proof coating on a glass substrate which is immersed in an aluminum so and, after heating to a medium temperature, is heated until the surface of the glass substrate bears a layer containing α-Al₂O₃,
characterised in that the aluminum sol is an alumina sol, substantially by means of which alumina is applied by the sol-gel method to the glass substrate and is converted to the γ-phase by heating before being heated up to the structural transformation to the α-phase.

2. A coating according to claim 1,
characterised in that the glass substrate is a glass pane (1) and the α-aluminium oxide layer (3) is thin enough for the coated glass pane (1) to be transparent.

3. A coating according to claim 1 or claim 2,
characterised in that a barrier layer (4) is provided between the glass substrate and the α-aluminium oxide layer (3) and prevents elements or compounds from diffusing out of the glass substrate and disturbing the formation of α-aluminium oxide.

4. A method of producing the scratch-proof coating according to any of the preceding claims,
characterised in that in order to reduce the temperature for converting the structure to the α-phase, α-aluminum oxide seeds and/or γ-aluminium oxide seeds are added to the alumina sol.

5. A method according to claim 4,
characterised in that the α-aluminum oxide seeds or the γ-aluminium oxide seeds have an average particle size of 10 to 200 nanometres, preferably about 100 nanometres.

6. A method according to claim 4 or claim 5,
characterised in that the α-aluminium oxide seeds or the γ-aluminium oxide seeds are added to the so in the proportion of 0.1 to 15 wt.%, preferably 1 to 7 wt.% relative to the weight of alumina.

7. A method according to claim 6,
characterised in that before heating the alumina for structural transformation to the α-phase the glass substrate is preheated with the alumina converted into the γ-phase in order to avoid tension cracks.

## Revendications

1. Enduit résistant aux rayures sur un substrat en verre qui a été immergé dans un sol d'aluminium et après un réchauffement à une température moyenne a été chauffé, de façon que la surface du substrat en verre comporte une couche qui contient α-Al₂O₃,
caractérisé en ce que
le sol d'aluminium est un sol d'alumine, avec lequel l'alumine a été appliquée essentiellement dans le procédé sol-gel sur le substrat en verre (1) et a été transformée par réchauffage dans la phase γ avant un chauffage permettant la transformation de structure dans la phase α.

2. Enduit selon la revendication 1,
caractérisé en ce que
le substrat de verre est une vitre (1) et la couche d'oxyde d'aluminium α (3) comporte seulement une épaisseur telle que la vitre (1) enduite soit transparente.

3. Enduit selon la revendication 1 ou 2,
caractérisé en ce qu'
entre le substrat en verre (1) et la couche d'oxyde d'aluminium α (3) est prévue une couche de barrage (4) qui empêche une diffusion gênant la formation d'oxyde d'aluminium α (3) d'éléments ou de composés du substrat de verre (1).

4. Procédé de fabrication de l'enduit résistant aux rayures selon une des revendications précédentes,
caractérisé en ce que
pour réduire la température de transformation de la structure en la phase α, on ajoute au sol d'alumine des germes d'oxyde d'aluminium α et/ou des germes d'oxyde d'aluminium γ.

5. Procédé selon la revendication 4,
caractérisé en ce que
les germes d'oxyde d'aluminium α ou les germes d'oxyde d'aluminium γ ont une grandeur moyenne de particules de 10 à 200 nanomètres, de préférence d'environ 100 nanomètres.

6. Procédé selon les revendications 4 ou 5,
caractérisé en ce qu'
on ajoute les germes d'oxyde d'aluminium α ou les germes d'oxyde d'aluminium γ en une quantité de 0,1 à 15 % en poids, de préférence de 1 à 7 % en poids, par rapport au poids de l'alumine dans le sol.

7. Procédé selon la revendication 6,
caractérisé en ce qu'
avant le chauffage pour la transformation de structure de l'alumine dans la phase α, le substrat de verre est préchauffé avec l'alumine transformé en la phase γ pour éviter la formation de fissures de tensions.
